# EUROPÄISCHE PATENTSCHRIFT

(11) **EP 1 220 075 B1**
(45) Veröffentlichungstag und Bekanntmachung des Hinweises auf die Patenterteilung: **17.12.2003**
(21) Anmeldenummer: 01127236.6
(22) Anmeldetag: 16.11.2001
(51) Int. Cl.: G06F 1/00

(54) **System und Verfahren zum Erteilen der Laufberechtigung für ein auf einem Rechner installiertes Programm**
System and method for authorising the execution of a software installed on a computer
Système et procédé pur authoriser l'exécution d'un logiciel installé sur un ordinateur

(30) Priorität: 29.12.2000 DE 10065684
(43) Veröffentlichungstag der Anmeldung: 03.07.2002
(73) Patentinhaber: Aladdin Knowledge Systems GmbH& Co. KG, 82110 Germering (DE)
(72) Erfinder: Zunke, Michael, 85609 Ascheim (DE)
(74) Vertreter: Grimm, Christian Jan Rainer

(56) Entgegenhaltungen:
- WO-A-00/59149
- US-A- 6 088 450
- US-A- 6 088 802
- US-A- 6 137 480

## Beschreibung

Die Erfindung bezieht sich auf ein System und ein Verfahren zum Erteilen der Laufberechtigung für ein auf einem Rechner installiertes Programm bei Vorliegen einer Programmlizenz. Damit kann die Nutzung einer unautorisierten Kopie auf einem anderen Rechner verhindert werden, so daß ein Softwarekopierschutz realisiert wird.

Bei einem solchen System kann als Identifikationscode beispielsweise die MAC-Adresse einer im Rechner eingebauten Netzwerkkarte, die Seriennummer des BIOS oder der Festplatte verwendet werden. Bei jedem Start des Programms kann die MAC-Adresse bzw. die entsprechende Seriennummer mit dem Referenzcode verglichen werden. Bei Übereinstimmung wird die Laufberechtigung für das Programm erteilt und es kann ausgeführt werden. Bei diesem System ist die Laufberechtigung des Programms mit dem Vorhandensein einer Hardwarekomponente (Netzwerkkarte, Festplatte) bzw. Softwarekomponente (BIOS) des Rechners verbunden, wodurch bei Ausfall dieser Komponente (z.B. aufgrund eines Defekts) oder bei Austausch der Komponente, die Laufberechtigung des Programms nachteilig nicht mehr erteilt werden kann.

Es ist weiterhin bekannt, die Laufberechtigung eines Programms auf einem Rechner dadurch zu überprüfen, daß eine während der Installation des Programms eingegebene Lizenznummer bei jedem Programmstart auf ihre Echtheit überprüft wird. Diese Lizenznummer wird dem Anwender normalerweise beim Erwerb des Programms mitgeteilt, z. B. in Form eines Aufklebers auf der Programmverpackung. Bei diesem Verfahren ist es nachteilhaft möglich, das Programm auf verschiedenen Rechnern in lauffähiger Weise zu installieren und gleichzeitig auszuführen, da zur Feststellung der Laufberechtigung nur die Echtheit der Lizenznummer überprüft wird, und z.B. keine Verknüpfung mit einer eindeutigen Komponente des Rechners, auf dem das Programm laufen soll, vorliegt.

Schließlich ist noch bekannt, zur Überprüfung der Laufberechtigung des Programms ein sogenanntes "Dongle" zu verwenden. Es handelt sich dabei um ein Hardwareelement, das mit dem Rechner verbunden ist (beispielsweise über die serielle oder parallele Schnittstelle). Das Programm ist so ausgelegt, daß es beim Start überprüft, ob das Dongle am Rechner angesteckt ist. Ist dies der Fall, wird die Laufberechtigung erteilt. Bei diesem Verfahren muß vom Programmhersteller das Dongle mitvertrieben werden, was zu höheren Kosten führt. Auch wird durch das Dongle eine Schnittstelle des Rechners belegt.

Aus der US 6,088,450 und der US 6,137,480 ist jeweils ein System gemäß dem Oberbegriff des Anspruchs 1 bekannt.

Aufgabe der vorliegenden Erfindung ist es, ein System und ein Verfahren zum Erteilen der Laufberechtigung für ein auf einem Rechner installiertes Programm bereitzustellen, mit denen die oben beschriebenen Schwierigkeiten so gut wie vollständig überwunden werden.

Erfindungsgemäß wird diese Aufgabe durch ein System zum Erteilen der Laufberechtigung für ein auf einem Rechner installiertes Programm bei Vorliegen einer Programmlizenz gelöst, wobei das System eine eine Empfangsvorrichtung enthaltende Überprüfungseinheit, die zumindest teilweise Bestandteil des Rechners oder mit ihm über eine Datenverbindung verbunden ist, und ein vom Rechner und der Überprüfungseinheit getrennt transportierbares Gerät umfaßt, das innerhalb eines vorbestimmten Abstands zur Empfangsvorrichtung mit dieser mittels einer drahtlosen Verbindung verbindbar ist, über die ein im Gerät enthaltener Identifikationscode zur Überprüfungseinheit übertragbar ist, wobei zur Bestimmung des Vorliegens der Programmlizenz über die drahtlose Verbindung der im Gerät enthaltene Identifikationscode zur Überprüfungseinheit übertragen wird, die Überprüfungseinheit den übertragenen Identifikationscode mit einem Referenz code vergleicht und bei Übereinstimmung das Vorliegen der Programmlizenz feststellt und daraufhin die Laufberechtigung erteilt.

Da der Identifikationscode im getrennt vom Rechner und getrennt von der Überprüfungseinheit transportierbaren Gerät abgelegt ist, ist die Überprüfung der Laufberechtigung bzw. Lizenz nicht mehr an das Vorhandensein einer speziellen Rechnerkomponente gebunden, so daß ein Ausfall oder Austausch dieser Rechnerkomponente nicht zum Wegfall der Laufberechtigung bzw. Lizenz führt. Aufgrund der Übertragung des Identifikationscodes über die drahtlose Verbindung können Gerät und Rechner mechanisch entkoppelt werden und es ist keine elektrische Leitung zwischen der Überprüfungseinheit und dem Gerät erforderlich.

Bei dem Gerät kann es sich insbesondere um ein Hardwareelement handeln, das zum herkömmlichen Betrieb des Rechners und auch zum Ausführen von anderen Programmen auf dem Rechner nicht notwendig ist. Es wird lediglich dazu eingesetzt, um das Vorliegen der Laufberechtigung des einen Programms festzustellen, so daß es auch nicht dauerhaft mit der Empfangsvorrichtung der Überprüfungseinheit verbunden sein muß.

Die Empfangsvorrichtung kann bevorzugt als Sende-/Empfangsvorrichtung ausgebildet sein. Dadurch kann sie beispielsweise den Aufbau der drahtlosen Verbindung starten, indem sie ein vorbestimmtes Anfragesignal aussendet, das dann vom Gerät drahtlos beantwortet wird. Als Gerät wird bevorzugt ein tragbares Gerät verwendet, das vom Programmanwender mitgeführt werden kann. Dabei handelt es sich insbesondere um ein Mobiltelefon, einen tragbaren Computer (wie z. B. ein PDA) oder auch einen Anhänger (z.B. ein Schlüsselanhänger). Somit ist die Softwarekopierschutzfunktion beim erfindungsgemäßen System an ein tragbares (persönliches) Gerät des Programmnutzers gekoppelt und hängt nicht mehr davon ab, auf welchen speziellen Rechner das Programm installiert ist. Damit kann der Programmnutzer das Programm auf einem Rechner seiner Wahl einsetzen.

Die Laufberechtigung bzw. die Programmlizenz ist beim erfindungsgemäßen System daher nicht mehr wie bisher üblich an den Rechner gebunden, auf dem das Programm installiert ist, sondern an das (persönliche) Gerät und dadurch an den Nutzer selbst bzw. an den, der das Gerät mit sich führt. Damit kann eine quasi personengebundene Softwarelizenz realisiert werden.

Der Vergleich von Identifikationscode und Referenzcode läßt sich auf die unterschiedlichsten Arten realisieren. So können beispielsweise die beiden Codes einfach direkt miteinander verglichen werden. Es kann jedoch einer der Codes verschlüsselt sein, und ein Vergleich wird erst nach der Entschlüsselung des verschlüsselten Codes oder Verschlüsselung des nicht verschlüsselten Codes durchgeführt. Es können natürlich auch beide Codes verschlüsselt sein, die erst entschlüsselt und dann verglichen werden. Zum Ver- und Entschlüsseln können bekannte Verfahren eingesetzt werden. Bei symmetrischen Verfahren wird nur ein Schlüssel verwendet, während bei asymmetrischen Verfahren ein geheimer und ein öffentlicher Schlüssel verwendet wird. Es ist auch möglich, daß der Referenzcode mit einer digitalen Signatur versehen ist, die die Überprüfungseinheit vor dem Vergleich der Codes überprüft, um sicher zu stellen, daß es sich bei dem Referenzcode um einen autorisierten Referenzcode (z.B. vom Programmanbieter) handelt.

In einer bevorzugten Weiterbildung des erfindungsgemäßen Systems ist der Identifikationscode eine eindeutige Kennung des Geräts. Somit gibt es nur ein einziges Gerät, in dem der dem Referenzcode entsprechende Identifikationscode abgelegt ist, so daß auch der Referenzcode nur ein einziges Mal vorliegt, wodurch vorteilhaft erreicht wird, daß das Programm nur auf einem Rechner und nicht auf mehreren Rechnern gleichzeitig laufen kann.

Vorteilhaft enthält die Überprüfungseinheit des erfindungsgemäßen Systems ein Softwaremodul zum Vergleich des Identifikationscodes mit dem Referenzcode. Dadurch läßt sich in einfacher Art und Weise ein gewünschter Vergleichsablauf (z.B. mit Verschlüsselungen eines oder beider Codes) realisieren.

Ferner ist es bevorzugt, daß bei der Installation des Programms auf dem Rechner der Identifikationscode des Geräts als Referenzcode bestimmbar ist. Damit kann der Programm-Anwender selbst auswählen, an welches Gerät die Laufberechtigung des Programms gekoppelt werden soll. So kann er beispielsweise sein Mobiltelefon oder irgend ein anderes tragbares Gerät auswählen, das er in der Regel mit sich führt. Als Installation des Programms ist hier das Einrichten des Programms auf dem Rechner gemeint. Das schließt z.B. auch den Fall ein, daß der Referenzcode erst bei dem ersten Programmstart oder auch zu einem späteren Zeitpunkt (beispielsweise nach mehreren Programmstarts, wenn der Programmanwender die Laufberechtigung an ein anderes Gerät koppeln möchte) bestimmt wird.

Bei dem erfindungsgemäßen System weist das Gerät insbesondere einen nicht-flüchtigen Speicher auf, in dem der Identifikationscode abgelegt ist. Dadurch wird erreicht, daß der Identifikationscode dauerhaft im Gerät gespeichert ist. Vorteilhaft ist es noch, wenn der Identifikationscode nicht veränderbar gespeichert ist, z.B. wenn er in einem Nur-Lese-Speicher, wie beispielsweise ein ROM, abgelegt ist.

Eine bevorzugte Weiterbildung des erfindungsgemäßen Systems besteht darin, daß das Gerät ein Mobiltelephon oder ein tragbarer Computer ist. Da der Programm-Anwender diese Geräte normaler Weise immer mit sich führt, liegt die Laufberechtigung für das Programm immer dann vor, wenn er am Computer sitzt und das Programm nutzen will.

Das erfindungsgemäße System kann insbesondere dadurch weitergebildet werden, daß die drahtlose Verbindung eine Funkverbindung ist, bevorzugt im GHz-Bereich gemäß dem Bluetooth-Standard, der durch die Bluetooth Special Interest Group spezifiziert ist.

Bei dem erfindungsgemäßen Verfahren zum Erteilen der Laufberechtigung für ein auf einem Rechner installiertes Programm bei Vorliegen einer Programmlizenz wird zur Bestimmung des Vorliegens der Programmlizenz ein in einem Gerät enthaltener Identifikationscode über eine drahtlose Verbindung aus dem Gerät abgefragt und mit einem Referenzcode verglichen, wobei bei Übereinstimmung das Vorliegen der Programmlizenz festgestellt und bei festgestelltem Vorliegen der Programmlizenz die Laufberechtigung erteilt wird. Aufgrund der Übertragung des Identifikationscodes über die drahtlose Verbindung muß keine mechanische Verbindung zwischen dem Gerät und dem Rechner vorliegen. Bevorzugt kann ein tragbares Gerät verwendet werden, das der Programmanwender in der Regel mit sich führt und das insbesondere zum sonstigen Betrieb des Rechners (z.B. zur Ausführung anderer Programme) nicht benötigt wird.

Bei einer Weiterbildung des erfindungsgemäßen Verfahrens wird als Identifikationscode eine eindeutige Kennung des Geräts genutzt. Somit liegt der Identifikationscode und auch der Referenzcode nur ein einziges Mal vor, so daß das Programm nur von dem Anwender benutzt werden kann, der das Gerät bei sich trägt.

Bevorzugt wird der Identifikationscode als Referenzcode bei der Installation des Programms auf dem Rechner bestimmt. Dadurch wird es dem Programmanwender ermöglicht, sich ein Gerät auszuwählen, an das die Laufberechtigung gekoppelt werden soll. Insbesondere kann der Anwender auch die Laufberechtigungen von mehreren Programmen an das gleiche Gerät anbinden.

Vorteilhaft wird beim erfindungsgemäßen Verfahren der Referenzcode dadurch festgelegt, daß der Identifikationscode des Geräts an eine Lizenzierungsstelle für das Programm übertragen wird, die dann als Referenzcode den Identifikationscode bestimmt. Wenn eine Datenverbindung zwischen der Lizenzierungsstelle und dem Rechner besteht, auf dem das Programm laufen soll (z.B. über das Internet), kann dieser bestimmte Referenzcode über die Datenverbindung zum Rechner und somit zur Überprüfungseinheit übertragen werden. Die Lizenzierungsstelle kann so aufgebaut bzw. betrieben werden, daß der Identifikationscode nur dann als Referenzcode bestimmt wird, wenn der Lizenzierungsstelle ein Freigabecode mitgeteilt wird. Dabei kann es sich beispielsweise um einen eindeutigen Freigabecode handeln, der zusammen mit dem Programm vertrieben wird. Dieser Freigabecode kann insbesondere dem Programm in geeigneter Weise beiliegen (z.B. aufgedruckt auf einem Zettel oder Aufkleber). Wenn dieser Freigabecode zum ersten mal der Lizenzierungsstelle mitgeteilt wird, gibt sie das Programm für den übermittelten Identifikationscode frei und vermerkt dies in einer Datenbank. Wenn nun der Freigabecode ein zweites mal an die Lizenzierungsstelle übertragen wird, stellt sie durch einen Vergleich mit der Datenbank fest, daß das Programm für diesen Freigabecode schon einmal freigeschaltet wurde, und gibt das Programm nicht noch einmal frei, d.h. der Identifikationscode wird nicht als Referenzcode bestimmt. Natürlich ist es auch möglich, eine weitere Prozedur für den Fall vorzusehen, wenn der Freigabecode ein zweites mal an die Lizenzierungsstelle übermittelt wird, die bei Vorliegen weiterer Informationen das Programm dennoch frei gibt. So kann der Anwender beispielsweise eine Mehrfachlizenz erworben haben und somit das Programm mehrfach freischalten lassen.

Mit diesen Schritten ist es für den Anwender einfach möglich festzulegen, welches Gerät für das Feststellen der Laufberechtigung des Programms eingesetzt werden soll. Der Anmelder kann daher selbst auswählen, ob er die Laufberechtigung des Programms z. B. an sein Mobiltelefon oder seinen Schlüsselanhänger anbindet.

Insbesondere kann der Identifikationscode auch über ein Netzwerk, wie z. B. das Internet, oder auch über eine direkte Datenverbindung an die Lizenzierungsstelle übertragen werden. Besonders vorteilhaft kann dann das Programm über diese Datenverbindung bzw. Netzwerk vertrieben werden, und gleichzeitig kann die Verknüpfung der Überprüfung der Laufberechtigung an das vom Anwender ausgewählte Gerät über dieses Netzwerk bzw. Datenverbindung (Übertragen des bestimmten Referenzcodes) erfolgen. Insbesondere besteht auch die Möglichkeit, daß der Anwender sich über eine Datenverbindung zwischen seinem Rechner und einer Vertriebsstelle ein gewünschtes Programm auswählt und den Identifikationscode eines von ihm ausgewählten Geräts an die Vertriebsstelle (die auch als Lizenzierungsstelle arbeitet) überträgt. Die Vertriebsstelle überträgt, nachdem beispielsweise die Bezahlung erfolgt ist, das gewünschte Programm einschließlich des bestimmten Referenzcodes über die Datenverbindung an den Rechner des Anwenders. Damit wird ein schnelles Vertreiben von Programmen ermöglicht, wobei gleichzeitig auch noch sichergestellt werden kann, daß das vertriebene Programm nur läuft, wenn dem Überprüfungsmodul der Identifikationscode des vom Anwender ausgewählten Geräts zugeführt wird. Somit kann die Kopplung der Laufberechtigung an ein vom Anwender gewünschtes Gerät erfolgen, selbst wenn zwischen dem Rechner des Anwenders und der Vertriebsstelle nur eine Datenverbindung besteht.

Bevorzugt wird die drahtlose Verbindung zwischen der Vorrichtung und dem Überprüfungsmodul automatisch hergestellt, wenn der Abstand zwischen ihnen einen vorbestimmten Wert unterschreitet. Dieser Abstand ist so gewählt, daß er sicher unterschritten wird, wenn der Anwender an dem Rechner arbeitet und das Gerät, in dem der Identifikationscode abgelegt ist, mit sich führt. Dadurch wird sichergestellt, daß die Laufberechtigung des Programms festgestellt wird, wenn der Anwender am Rechner sitzt und mit dem Programm arbeiten will.

Besonders vorteilhaft können das erfindungsgemäße Verfahren und das erfindungsgemäße System noch dadurch weitergebildet werden, daß der Identifikationscode der Überprüfungseinheit erst zugeführt wird, nachdem ein Freischaltcode in das Gerät eingegeben wurde. Bei diesem Freischaltcode kann es sich beispielsweise um eine vierstellige Nummer handeln, die über eine entsprechende Eingabeeinheit in das Gerät eingegeben wird. Dadurch kann der Anwender beispielsweise die Verwendung des Programms für Dritte sperren, selbst wenn diese in Besitz des Geräts mit dem Identifikationscode sind.

In einer vorteilhaften Weiterbildung ist die drahtlose Verbindung zwischen dem Gerät und der Überprüfungseinheit eine Funkverbindung im GHz-Bereich, wodurch die Herstellung der drahtlosen Verbindung gewährleistet werden kann, selbst wenn kein Sichtkontakt zwischen dem Gerät und der Überprüfungseinheit vorhanden ist, wie dies im Fall einer Infrarot-Verbindung nötig ist.

Insbesondere kann der Identifikationscode die Bluetooth-Adresse (die gemäß dem Standard der Bluetooth Special Interest Group festgelegt ist) des Geräts sein, wobei es natürlich auch möglich ist, daß der Identifikationscode die Bluetooth-Adresse verschlüsselt oder unverschlüsselt enthält oder aus ihr abgeleitet ist, wodurch vorteilhaft eine Eindeutigkeit des Identifikationscodes Ober die Eindeutigkeit der Bluetooth-Adresse erreicht wird. Ferner kann der Anwender jede beliebige Bluetooth-fähige Vorrichtung auswählen, an die er die Laufberechtigung koppeln möchte.

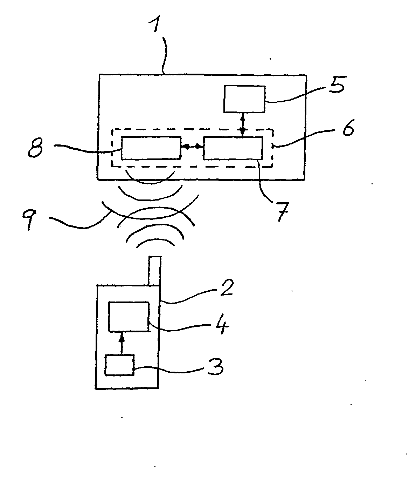

Die Erfindung wird nachfolgend anhand der einzigen Zeichnung im Prinzip beispielshalber noch näher erläutert.

Die Figur zeigt schematisch das erfindungsgemäße System, das einen Rechner 1 und ein vom Rechner unabhängiges Gerät 2 umfaßt. Das Gerät 2 ist eine Vorrichtung, die bevorzugt zum normalen Betrieb des Rechners nicht notwendig ist. Im hier beschriebenen Beispiel ist das Gerät 2 ein Mobiltelefon, das seinerseits zum normalen Betrieb unabhängig vom Rechner 1 ist.

Das Gerät 2 enthält zumindest einen Speicher 3 und eine Sende-/Empfangseinrichtung 4. In dem Speicher 3, der beispielsweise ein ROM sein kann, ist ein eindeutiger Identifikationscode des Gerätes 2 abgelegt, der bevorzugt nicht abgeändert werden kann. Ferner kann das Gerät noch weitere Komponenten (nicht gezeigt) aufweisen. Im vorliegenden Beispiel weist es noch die Komponenten auf, die für den bestimmungsgemäßen Gebrauch als Mobiltelefon notwendig sind.

Der Rechner 1 enthält ein auf ihm installiertes Programm 5 (z.B. eine CAD-Software), dessen Laufberechtigung überprüft und erteilt werden soll, und eine Überprüfungseinheit 6, die ein Überprüfungsmodul 7 und eine Sende-/Empfangsvorrichtung 8 aufweist. Des weiteren enthält der Rechner 1 beispielsweise noch weitere Komponenten (nicht gezeigt) eines herkömmlichen Personal-Computers und kann mit verschiedenen Peripheriegeräten (nicht gezeigt), wie z. B. Drucker, Scanner, Bildschirm, Tastatur und Maus, verbunden sein.

Die Sende-/Empfangseinrichtung 4 und die Sende-/Empfangsvorrichtung 8 bilden zusammen eine Übertragungseinrichtung, mit der über eine drahtlose Verbindung 9 der Identifikationscode des Geräts 2, der im Speicher 3 abgelegt ist und durch die Sende-/Empfangseinrichtung 4 ausgelesen werden kann, zur Überprüfungseinheit 6 übertragen werden kann. Die drahtlose Verbindung 9 ist insbesondere eine Funkverbindung, die beispielsweise gemäß dem Bluetooth-Standard arbeitet, der durch die Bluetooth Special Interest Group festgelegt ist. In diesem Fall ist es vorteilhaft, wenn der eindeutige Identifikationscode des Gerätes 2 die Bluetooth-Adresse des Geräts ist oder auf dieser basiert bzw. von ihr abgeleitet ist, da dies bereits ein eindeutiges Identifikationsmerkmal bzw. eine eindeutige Kennung darstellt.

Das Überprüfungsmodul 7 der Überprüfungseinheit 6 kann als Software, als Soft- und Hardware oder nur als Hardware realisiert sein. Wenn es als Software realisiert ist, kann es auch Teil des Programms 5 selbst sein, dessen Laufberechtigung überprüft und erteilt werden soll. In dem Programm 5, dem Überprüfungsmodul 7 oder an einer anderen Stelle, die dem Überprüfungsmodul 7 bekannt ist, ist ein die Programmausführung freigebender Referenzcode abgelegt.

Die Überprüfung der Laufberechtigung des Programmes 5 wird wie folgt durchgeführt. Wenn das Programm 5 auf dem Rechner 1 gestartet werden soll, fragt das Programm 5 beim Überprüfungsmodul 7 an, ob die Laufberechtigung vorliegt. Das Überprüfungsmodul 7 wiederum aktiviert die Sende-/Empfangsvorrichtung 8, die ihrerseits die drahtlose Verbindung 9 zum Gerät 2 herstellt, wenn diese nicht bereits besteht, und das Gerät 2 auffordert, seinen Identifikationscode mitzuteilen. Im Gerät 2 liest daraufhin die Sende-/Empfangseinrichtung 4 den Identifikationscode aus dem Speicher 3 aus und überträgt ihn über die drahtlose Verbindung an die Sende-/Empfangsvorrichtung 8 der Überprüfungseinheit 6. Die Sende-/Empfangsvorrichtung 8 überträgt diesen Identifikationscode an das Überprüfungsmodul 7, und das Überprüfungsmodul 7 stellt dann fest, ob der empfangene Identifikationscode dem Referenzcode für das Programm 5 entspricht. Wenn dies der Fall ist, stellt das Überprüfungsmodul 7 das Vorliegen der Laufberechtigung des Programms 5 fest und gibt das Programm 5 frei. Diese Überprüfung kann während des Programmablaufs in vorbestimmten Abständen oder auch bei Aufruf vorher festgelegter Programmfunktionen wiederholt werden. Die Überprüfung muß auch nicht gleich bei Programmstart durchgeführt werden, sie kann auch später erfolgen.

Die Art und Weise, wie das Überprüfungsmodul 7 den ihr übermittelten Identifikationscode des Geräts 2 mit dem Referenzcode vergleicht, hängt z.B. davon ab, wie der Referenzcode in das Programm 5, das Überprüfungsmodul 7 oder an einer anderen dem Überprüfungsmodul 7 bekannten Stelle eingebunden ist. Der Referenzcode kann beispielsweise unverschlüsselt abgelegt sein. In diesem Fall wird durch einen direkten Vergleich zwischen dem abgelegten Referenzcode und dem über die drahtlose Verbindung 9 übertragenen Identifikationscode das Vorliegen der Laufberechtigung festgestellt. Alternativ kann der Referenzcode auch verschlüsselt abgelegt sein und bei der Überprüfung wird dann der übertragene Identifikationscode ebenfalls verschlüsselt, und beide verschlüsselten Werte werden verglichen, oder der verschlüsselt abgelegte Referenzcode wird entschlüsselt und dann mit dem übertragenen Identifikationscode verglichen.

Der verschlüsselt abgelegte Referenzcode kann entweder durch ein symmetrisches Verschlüsselungsverfahren, bei dem sowohl zum Verschlüsseln als auch zum Entschlüsseln derselbe geheime Schlüssel verwendet wird, oder durch ein asymmetrisches Verschlüsselungsverfahren, bei dem die Entschlüsselung und die Verschlüsselung mit unterschiedlichen Schlüsseln durchgeführt wird, verschlüsselt sein. Beim asymmetrischen Verschlüsselungsverfahren wird die Verschlüsselung bevorzugt mit dem geheimen Schlüssel durchgeführt, so daß die Entschlüsselung mit dem öffentlichen Schlüssel möglich ist.

Die Einbindung des Referenzcodes in das Programm 5 oder das Überprüfungsmodul 7 kann, wenn das Programm 5 über eine Datenverbindung, wie z. B. das Internet, heruntergeladen wird, bevorzugt wie folgt durchgeführt werden:

Der Anwender stellt die Datenverbindung zwischen seinem Rechner 1 und einem Rechner des Anbieters des gewünschten Programms her. Nachdem der Anwender das gewünschte Programm ausgewählt hat, und, falls nötig, die Bezahlung geregelt ist, wird dem Anbieter der Identifikationscode des Geräts 2 über die drahtlose Verbindung 9 und über die Datenverbindung übertragen. Dabei kann der Anwender selbst bestimmen, welches Gerät er als Gerät 2 einsetzen will. So kann er zum Beispiel sein Mobiltelefon auswählen, das er in der Regel bei sich trägt. Der Anbieter bindet den ihm übertragenen Identifikationscode des Geräts 2 in das gewünschte Programm 5 ein und überträgt das so geänderte Programm 5 zum Rechner 1 des Anwenders. Das Programm 5 enthält dabei das Überprüfungsmodul 7, so daß der Anwender auf seinem Rechner 1 ein Programm erhält, dessen Laufberechtigung an den Identifikationscode des Gerätes 2 gekoppelt ist.

Alternativ kann man auch nur die Einbindung des Referenzcodes über die Datenverbindung durchführen. Bei Installation des Programms wird der Anwender aufgefordert, ein Gerät bereitzustellen, an dessen Identifikationscode die Laufberechtigung gekoppelt werden soll. Sobald er dies getan hat, wird dieser Identifikationscode über die Datenverbindung, wie z. B. das Internet, zusammen mit einer Autorisierung (z. B. eine eindeutige Seriennummer auf der Verpackung) an den Anbieter übertragen, der daraufhin den Identifikationscode als Referenzcode an den Rechner 1 und damit an das Programm 5 überträgt. Der Referenzcode kann zum Rechner zusammen mit einer digitalen Signatur übertragen werden, so daß das Überprüfungsmodul sicher feststellen kann, daß der vorhandene Referenzcode auch tatsächlich vom Programmanbieter freigegeben ist.

Es ist ferner möglich, direkt beim Erwerb des Programms in einem Ladengeschäft die Freischaltung durchführen zu lassen, wenn der Anwender das von ihm gewünschte Gerät (z. B. Mobiltelefon) mit sich führt. In diesem Fall kann beispielsweise auf einem Datenträger der Identifikationscode direkt oder im Rahmen eines Ergänzungsprogramms abgespeichert werden. Dazu muß nur ein Rechner vorhanden sein, der eine Sende-/Empfangsvorrichtung, die den Identifikationscode des Gerätes empfangen kann, und eine entsprechende Software umfaßt, mit der dann auf dem Datenträger die notwendigen Daten gespeichert werden. Bei der Installation des Programms auf dem Rechner des Anwenders muß dann der Datenträger eingelegt werden und der Referenzcode wird in das Programm bzw. Überprüfungsmodul eingebunden.

Die Überprüfungseinheit 6 muß nicht unbedingt im Rechner 1 enthalten sein, sondern kann, wenn der Rechner 1 z.B. in einem Netzwerk eingebunden ist, auch an einer beliebig anderen Stelle im Netzwerk vorhanden sein. In diesem Fall muß jedoch die Sende-/Empfangsvorrichtung 8 innerhalb der Reichweite der Sende-/Empfangseinrichtung 4 des Gerätes 2 sein. Natürlich kann auch nur das Überprüfungsmodul 7 der Überprüfungseinheit 6 an einer anderen Stelle im Netzwerk sein und die Sende-/Empfangsvorrichtung 8 verbleibt im oder am Rechner 1.

Des weiteren können verschiedene Überprüfungsmodule oder -einheiten für verschiedene Programme in einem Lizenzmanager zusammengefaßt sein, der entweder im Rechner 1 angeordnet ist oder im Netzwerk stehen kann, wenn der Rechner in einem Netzwerk eingebunden ist. Dadurch können verschiedene Programme auf einem Rechner mit einem Gerät 2 oder auch mit unterschiedlichen Geräten, wie dies vom Anwender festgelegt ist, gekoppelt sein.

Mit dem erfindungsgemäßen Verfahren und dem erfindungsgemäßen System lassen sich somit ein neuer Kopierschutz realisieren, bei dem die Laufberechtigung bzw. Lizenz quasi an den Programmnutzer (über das von ihm mitgeführte Gerät) und nicht mehr an den Rechner, auf dem das Programm installiert ist, gebunden wird.

## Patentansprüche

1. System zum Erteilen der Laufberechtigung für ein auf einem Rechner (1) installiertes Programm (5) bei Vorliegen einer Programmlizenz, wobei das System eine eine Empfangsvorrichtung (8) enthaltende Überprüfungseinheit (6), die zumindest teilweise Bestandteil des Rechners (1) oder über eine Datenverbindung mit ihm verbunden ist, und ein vom Rechner (1) und der Überprüfungseinheit (6) getrennt transportierbares Gerät (2) umfaßt, das innerhalb eines vorbestimmten Abstands zur Empfangsvorrichtung (8) mit dieser mittels einer drahtlosen Verbindung (9) verbindbar ist, über die ein im Gerät (2) enthaltener Identifikationscode zur Überprüfungseinheit (6) übertragen wird, **dadurch gekennzeichnet, daß** zur Bestimmung des Vorliegens der Programmlizenz über die drahtlose Verbindung (9) der im Gerät (2) enthaltene Identifikationscode zur Überprüfungseinheit (6) übertragen wird, die Überprüfungseinheit (6) den übertragenen Identifikationscode mit einem Referenzcode vergleicht und bei Übereinstimmung das Vorliegen der Programmlizenz feststellt und daraufhin die Laufberechtigung erteilt.

2. System nach Anspruch 1, bei dem der Identifikationscode eine eindeutige Kennung des Geräts (2) ist und/oder bei dem die Überprüfungseinheit (6) ein Softwaremodul (7) zum Vergleich des Identifikationscodes mit dem Referenzcode enthält.

3. System nach Anspruch 1 oder 2, bei dem bei Installation des Programms (5) auf dem Rechner (1) der Identifikationscode des Geräts (2) als Referenzcode bestimmbar ist und/oder bei dem das Gerät (2) einen nicht-flüchtigen Speicher (3) umfaßt, in dem der Identifikationscode gespeichert ist.

4. System nach einem der Ansprüche 1 bis 3, bei dem das Gerät (2) ein Mobiltelefon oder ein tragbarer Computer ist und/oder bei dem die drahtlose Verbindung (9) eine Funkverbindung, insbesondere eine Bluetooth-Funkverbindung, ist.

5. System nach einem der Ansprüche 1 bis 4, bei dem das Gerät (2) eine Eingabeeinheit umfaßt, über die ein Freischaltcode eingebbar ist, wobei das Gerät (2) die Übertragung des Identifikationscodes erst nach Eingabe eine vorbestimmten Freischaltcodes ermöglicht.

6. Verfahren zum Erteilen der Laufberechtigung für ein auf einem Rechner (1) installiertes Programm (5) bei Vorliegen einer Programmlizenz, **dadurch gekennzeichnet daß** zur Bestimmung des Vorliegens der Programmlizenz ein in einem Gerät (2) enthaltener Identifikationscode über eine drahtlose Verbindung (9) aus dem Gerät (2) abgefragt und mit einem Referenzcode verglichen und bei Übereinstimmung das Vorliegen der Programmlizenz festgestellt und bei festgestelltem Vorliegen der Programmlizenz die Laufberechtigung erteilt wird.

7. Verfahren nach Anspruch 6, bei dem als Identifikationscode eine eindeutige Kennung des Geräts (2) ausgelesen wird und/oder bei dem bei der Installation des Programms (5) auf dem Rechner (1 ) der Identifikationscode des Geräts (2) als Referenzcode bestimmt wird.

8. Verfahren nach Anspruch 6 oder 7, bei dem eine Lizenzierungsstelle für das Programm (5), zu der der Identifikationscode des Geräts (2) übertragen wird, als Referenzcode den übertragenen Identifikationscode bestimmt, wobei der Identifikationscode bevorzugt über eine drahtlose Verbindung zum Rechner (1) und vom Rechner (1) zur Lizenzierungsstelle über eine Datenverbindung übermittelt wird und der Identifikationscode als Referenzcode bevorzugt über die Datenverbindung von der Lizenzierungsstelle zum Rechner (1) übertragen wird.

9. Verfahren nach Anspruch 8, bei dem auch das Programm (5) von der Lizenzierungsstelle über die Datenverbindung zum Rechner (1 ) übertragen wird.

10. Verfahren nach einem der Ansprüche 6 bis 9, bei dem der Identifikationscode von einer Überprüfungseinheit (6) über eine drahtlose Verbindung zwischen dem Gerät (2) und der Überprüfungseinheit (6) ausgelesen wird, wobei die drahtlose Verbindung (9) automatisch hergestellt wird, wenn der Abstand vom Gerät (2) zu einer Empfangsvorrichtung (8) der Überprüfungseinheit (6) einen vorbestimmten Wert unterschreitet.

11. Verfahren nach einem der Ansprüche 6 bis 10, bei dem der Identifikationscode von der Überprüfungseinheit (6) ausgelesen wird, nachdem ein Freischaltcode in das Gerät (2) eingegeben wurde, und/oder bei dem als drahtlose Verbindung (9) eine Funkverbindung im GHz-Bereich, insbesondere eine Bluetooth-Funkverbindung, verwendet wird.

## Claims

1. A system for giving run authorization to a program (5), if a program license is present, said program (5) being installed on a computer (1) and said system comprising a checking unit (6) which includes a receiving device (8) and, at least partially, forms part of the computer (1) or is linked with the latter via a data link, and a device (2) which is transportable separately from the computer (1) and from the checking unit (6) and is connectable to the receiving device (8) within a predetermined distance therefrom by a wireless link (9) through which an identification code contained in said device (2) is transmitted to the checking unit (6), **characterized in that**, in order to determine the presence of the program license via said wireless link (9), the idenficiation code contained in said device (2) is transmitted to the checking unit (6), which checking unit (6) compares the transmitted identification code with a reference code and, if both codes are identical, determines the presence of the program license and then gives said run authorization.

2. The system as claimed in Claim 1, wherein the identification code is a unique identifier of the device (2) and/or wherein the checking unit (6) contains a software module (7) for comparing the identification code with the reference code.

3. The system as claimed in Claim 1 or 2, wherein the identification code of the device (2) may be defined as the reference code when installing the program (5) on the computer (1) and/or wherein the device (2) comprises a non-volatile memory (3) in which the identification code is stored.

4. The system as claimed in any of Claims 1 to 3, wherein the device (2) is a mobile phone or a portable computer and/or wherein the wireless link (9) is a radio link, in particular a Bluetooth radio link.

5. The system as claimed in any of Claims 1 to 4, wherein the device (2) comprises an input unit, through which an enabling code may be entered, said device (2) enabling transmission of the identification code only upon input of a predetermined enabling code.

6. A method for giving run authorization to a program (5), if a program license is present, said program (5) being installed on a computer (1), **characterized in that**, in order to determine the presence of said program license, an identification code contained in a device (2) is requested from the device (2) via a wireless link (9) and is compared with a reference code, and, if both codes are identical, the presence of the program license is determined and, upon determining the presence of the program license, said run authorization is given.

7. The method as claimed in Claim 6, wherein a unique identifier of the device (2) is read out as the identification code and/or the identification code of the device (2) is defined as the reference code when installing the program (5) on the computer (1).

8. The method as claimed in Claim 6 or 7, wherein a license provider for the program (5), to whom the identification code of the device (2) is transmitted, defines the transmitted identification code as the reference code, wherein the identification code is preferably transmitted to the computer (1) by a wireless link and is transmitted from the computer (1) to the license provider via a data link, and the identification code is preferably transmitted as the reference code from the license provider to the computer (1) via said data link.

9. The method as claimed in Claim 8, wherein the program (5) is also transmitted from the license provider to the computer (1) via said data link.

10. The method as claimed in any of Claims 6 to 9, wherein the identification code is read out by a checking unit (6) via a wireless link between the device (2) and the checking unit (6), said wireless link (9) being established automatically as soon as the distance between the device (2) and a receiving device (8) of the checking unit (6) is below a predetermined value.

11. The method as claimed in any of Claims 6 to 10, wherein the identification code is read out by the checking unit (6) after an enabling code has been entered into the device (2) and/or wherein a radio link in the GHz range, in particular a Bluetooth radio link, is used as the wireless link (9).

## Revendications

1. Système pour délivrer l'autorisation de faire tourner un programme (5) installé dans un ordinateur (1) en présence d'une licence de programme, le système comprenant une unité de contrôle (6) contenant un dispositif de réception (8), laquelle fait partie intégrante au moins partiellement de l'ordinateur (1) ou est reliée à celui-ci par un circuit informatique, ainsi qu'un appareil (2) transportable séparément de l'ordinateur (1) et de l'unité de contrôle (6), lequel peut être relié, à l'intérieur d'une distance prédéterminée par rapport au dispositif de réception (8), à celui-ci, par une liaison sans fil (9) par laquelle un code d'identification contenu dans l'appareil (2) est transmis à l'unité de contrôle (6), **caractérisé en ce que** pour déterminer la présence de la licence de programme, le code d'identification contenu dans l'appareil (2) est transmis, par la liaison sans fil (9), à l'unité de contrôle (6), l'unité de contrôle (6) compare le code d'identification transmis à un code de référence et en cas de coïncidence constate la présence de la licence de programme et délivre ensuite l'autorisation d'utilisation.

2. Système selon la revendication 1, dans lequel le code d'identification est une identification univoque de l'appareil (2) et/ou dans lequel l'unité de contrôle (6) contient un module de logiciel (7) pour la comparaison du code d'identification au code de référence.

3. Système selon la revendication 1 ou 2, dans lequel lorsque le programme (5) est installé dans l'ordinateur (1), le code d'identification de l'appareil (2) peut être défini comme code de référence et/ou dans lequel l'appareil (2) comprend une mémoire (3) non volatile dans laquelle est mémorisé le code d'identification.

4. Système selon l'une des revendications 1 à 3, dans lequel l'appareil (2) est un téléphone mobile ou un ordinateur portable et/ou dans lequel la liaison sans fil (9) est une liaison radio, en particulier une liaison radio Bluetooth.

5. Système selon l'une des revendications 1 à 4, dans lequel l'appareil (2) comprend une unité d'entrée par laquelle on peut entrer un mot de passe, l'appareil (2) n'autorisant la transmission du code d'identification qu'après entrée d'un mot de passe prédéterminé.

6. Procédé pour délivrer l'autorisation de faire tourner un programme (5) installé dans un ordinateur (1) en présence d'une licence de programme, **caractérisé en ce que** pour déterminer la présence de la licence de programme, un code d'identification contenu dans un appareil (2) est interrogé dans l'appareil (2) par une liaison sans fil (9), et est comparé à un code de référence, et en cas de coïncidence la présence de la licence de programme est constatée et en cas de présence constatée de la licence de programme, l'autorisation de faire tourner le programme est délivrée.

7. Procédé selon la revendication 6, dans lequel on choisit comme code d'identification une identification univoque de l'appareil (2) et/ou dans lequel, lorsque le programme (5) est installé dans l'ordinateur (1), on définit le code d'identification de l'appareil (2) comme code de référence.

8. Procédé selon la revendication 6 ou 7, dans lequel un bureau de concession de licence pour le programme (5), auquel le code d'identification de l'appareil (2) est transmis, définit comme code de référence le code d'identification transmis, le code d'identification étant transmis de préférence à l'ordinateur (1) par une liaison sans fil, et de l'ordinateur (1) au bureau de concession de licence par un circuit informatique, et le code d'identification en tant que code de référence étant transmis à l'ordinateur (1), de préférence par le circuit informatique du bureau de concession de licence.

9. Procédé selon la revendication 8, dans lequel le programme (5) est également transmis du bureau de concession de licence à l'ordinateur (1) par le circuit informatique.

10. Procédé selon l'une des revendications 6 à 9, dans lequel le code d'identification est extrait par une unité de contrôle (6) par une liaison sans fil entre l'appareil (2) et l'unité de contrôle (6), la liaison sans fil (9) étant automatiquement établie lorsque la distance entre l'appareil (2) et un dispositif de réception (8) de l'unité de contrôle (6) passe au-dessous d'une valeur prédéterminée.

11. Procédé selon l'une des revendications 6 à 10, dans lequel le code d'identification est extrait par l'unité de contrôle (6) après qu'un mot de passe a été introduit dans l'appareil (2) et/ou dans lequel on utilise comme liaison sans fil (9) une liaison radio de la gamme des fréquences GHz, en particulier une liaison radio Bluetooth.
